# EUROPEAN PATENT SPECIFICATION

(11) **EP 3 009 763 B1**
(45) Date of publication and mention of the grant of the patent: **09.12.2020**
(21) Application number: 15189510.9
(22) Date of filing: 13.10.2015
(51) Int. Cl.: F24S 80/30, F24S 40/80

(54) **SOLAR THERMAL COLLECTOR**
SOLARTHERMISCHER KOLLEKTOR
COLLECTEUR SOLAIRE THERMIQUE

(30) Priority: 16.10.2014 FI 20145907
(43) Date of publication of application: 20.04.2016
(73) Proprietor: Savo-Solar OY, 50100 Mikkeli (FI)
(72) Inventor: FREDERIKSEN, Torben, DK-5250 ODENSE SV (DK); NORDVIG NIELSEN, Mads, 2300 København S (DK)
(74) Representative: Berggren Oy, Helsinki & Oulu

(56) References cited:
- EP-A2- 2 369 265
- WO-A1-2008/000281
- WO-A2-2012/140565
- GB-A- 2 429 517
- JP-A- S 616 544

## Description

### Technical field

The application relates generally to a solar thermal collector.

### Background

Large area solar thermal collectors with maximum dimensions of many meters are installed on an installation area, wherein adjacent collectors form rows and the installation area comprises a number of adjacent collector rows.

Each self-supported collector is typically installed by means of two installation supports and each support comprises a vertical support pile and an inclined support pile. Lower ends of the vertical and inclined piles are attached to a concrete base or rammed into a ground, and the upper ends are attached to each other so that the base and piles form a triangle. The vertical pile raises an upper edge of a collector and the inclined pile supports a back side of the collector, when the back side leans on it, and provides a desired inclination for the collector.

A collector is lifted directly in its position on the supports, which are arranged on the ground so that the inclined piles locate usually approx. 1/4 from each collector side, and attached to the piles. The supports are installed at high pace so that it is difficult for a vehicle with a crane to move between the supports and it needs an extra caution and work to position collectors on the supports.

The adjacent and positioned collectors are connected to each other by corner-to-corner connections, which are provided by 180 degrees bent external flexible metal hoses, whereupon a minimum space between collectors can be approx. 150-200 mm because of the characteristic of the hoses and collector alignment tolerances. The hoses provide external compensation for thermal expansion, but those need a dedicated external hose insulation and protection material.

One example to connect solar collectors is presented in WO 2012/140565.

### Summary

One object of the invention is to withdraw the above-mentioned drawbacks and provide a solar thermal collector.

One object of the invention is fulfilled by providing a solar thermal collector and a method according to the independent claims.

One embodiment is a solar thermal collector comprising an absorber for absorbing solar radiation, the absorber comprising a heat transport channel for a heat transport fluid, a collector frame for covering the absorber, the frame comprising an access hole and an exit hole, and hydraulic connection tubes for connecting the heat transport channel and other heat transport channels through the access and exit holes. The tubes are installed at least partly inside the collector and at least one of the tubes is flexible inside the collector, between side frames of the collector frame, and it is arranged so that it is bendable inside the collector, wherein at least one of the tubes is such that it is possible to bend it outside the frame during a connection to other heat transport channel.

The term "hydraulic connection tube(s)" refers to hydraulic connection means, which can be e.g. a tube, hose, or any other hollow, elongated element (body) that can be used for conveying heat transport fluids used in solar thermal collectors. The means are made of e.g. at least one of the following materials: metal, plastic, and rubber.

One embodiment is a method for connecting a solar thermal collector, which comprising an absorber for absorbing solar radiation, the absorber comprising a heat transport channel for a heat transport fluid, and a collector frame for covering the absorber, the frame comprising an access hole and an exit hole. The method comprising connecting, by means of hydraulic connection tubes, the heat transport channel and other heat transport channels through the access and exit holes, when the tubes are installed at least partly inside the collector and at least one of the tubes is flexible inside the collector, between side frames of the collector frame and it is arranged so that it is bendable inside the collector, wherein at least one of the tubes is such that it is possible to bend it outside the frame during a conneciton to other heat transport channel.

Further embodiments are defined in dependent claims.

The verb "to comprise" is used in this document as an open limitation that neither excludes nor requires the existence of also unrecited features. The verbs "to include" and "to have/has" are defined as to comprise.

The terms "a", "an" and "at least one", as used herein, are defined as one or more than one and the term "plurality" is defined as two or more than two.

The term "another", as used herein, is defined as at least a second or more.

The term "or" is generally employed in its sense comprising "and/or" unless the content clearly dictates otherwise.

For the above-mentioned defined verbs and terms, these definitions shall be applied, unless a different definition is given in the claims or elsewhere in this description.

Finally, the features recited in depending claims are mutually freely combinable unless otherwise explicitly stated.

### Brief description of the figures

The embodiments of the invention will be described with reference to the accompanying figures, in which
- figures 1a-1e: illustrate a T-shaped mounting support and a sliding of a solar thermal collector along the support during a mounting, and
- figures 2a-2c: illustrate a flexible hydraulic connection tubes.

### Detailed description of the figures

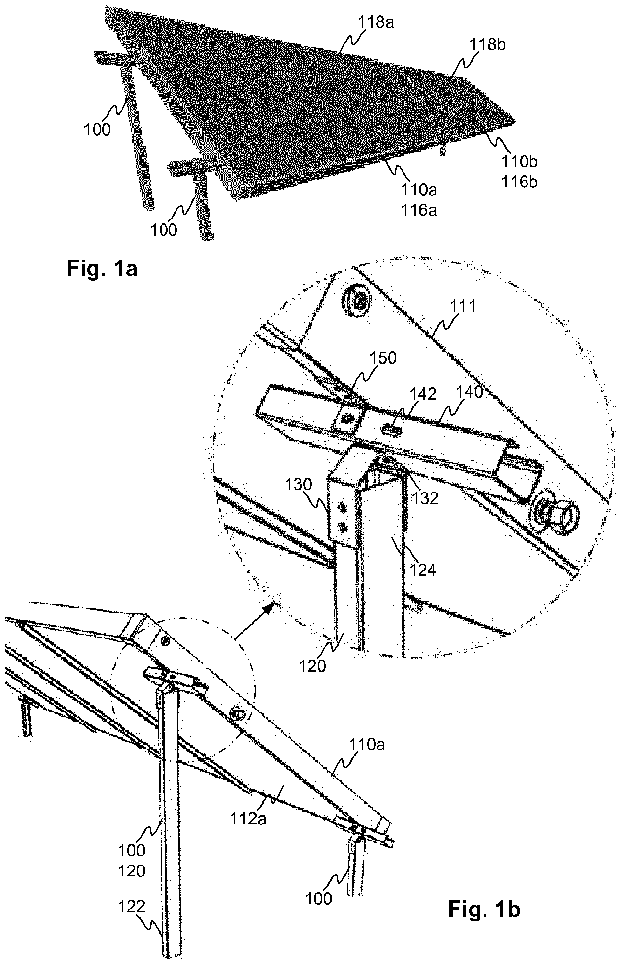

Figure 1a illustrates two adjacent large area solar thermal collectors 110a, 110b on a ground or elsewhere mounted by means of lower (first) and upper (second) T-shaped mounting supports 100, which provides an improved mechanical support for the collectors 110a, 110b.

The lower supports 100 are configured to support lower parts 116a, 116b of the collectors 110a, 110b and the upper supports 100, for one, are configured to support upper parts 118a, 118b.

The use of the supports 100 reduces a number of required supports by repositioning them to a far side of each collector 110a, 110b and, hereby enabling that each support 100 can be shared by two adjacent collectors 110a, 110b.

Figure 1b illustrates details of the mounting support 100, which can be made of metal parts 120, 130, 140, e.g. stainless or galvanized steel parts.

The support 100 comprises a C-shaped, I-shaped or other type of vertical support part 120 that has a bottom end 122 and a top end 124. The bottom end 122 is configured to be mounted into the ground or a mounting base e.g. a concrete or metal base.

The support 100 further comprises an inclination part 130, which is attached to the top end 124. It comprises an inclined surface 132 to which a C-shaped, I-shaped of other type of horizontal support part 140 is attached in order to form the T-shaped support 100. It is possible to use more than one parts 120 to support the part 140.

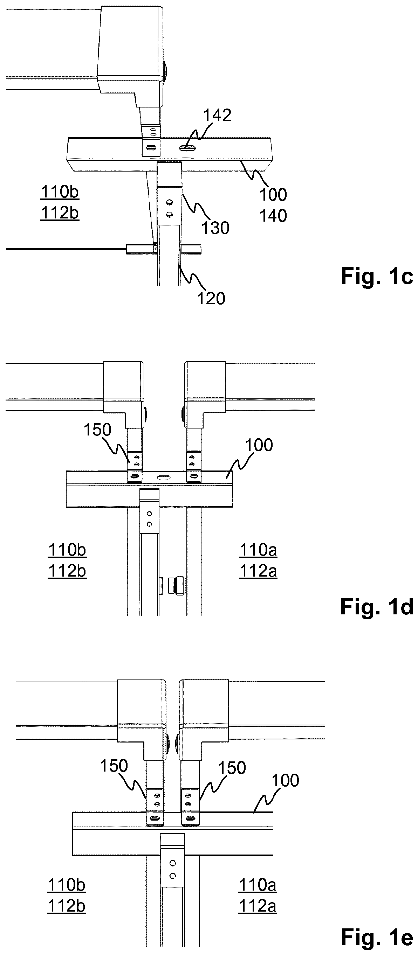

Figure 1c illustrates one collector 110b that is mounted on the support 100. The support 100 can be e.g. a shared support, which can support e.g. two collectors 110, 110b.

The part 140 is configured to support the collector(s) 110a, 110b and enables to slide one supported collector 110a - after it has been lifted on the supports 100 as figure 1d illustrates - along the part 140 in a horizontal direction e.g. towards the supported collector 110b in order to mount the collector(s) 110a, 110b according to figure 1e. The mounted collector(s) 110a, 110b is inclined according to the inclined surface 132.

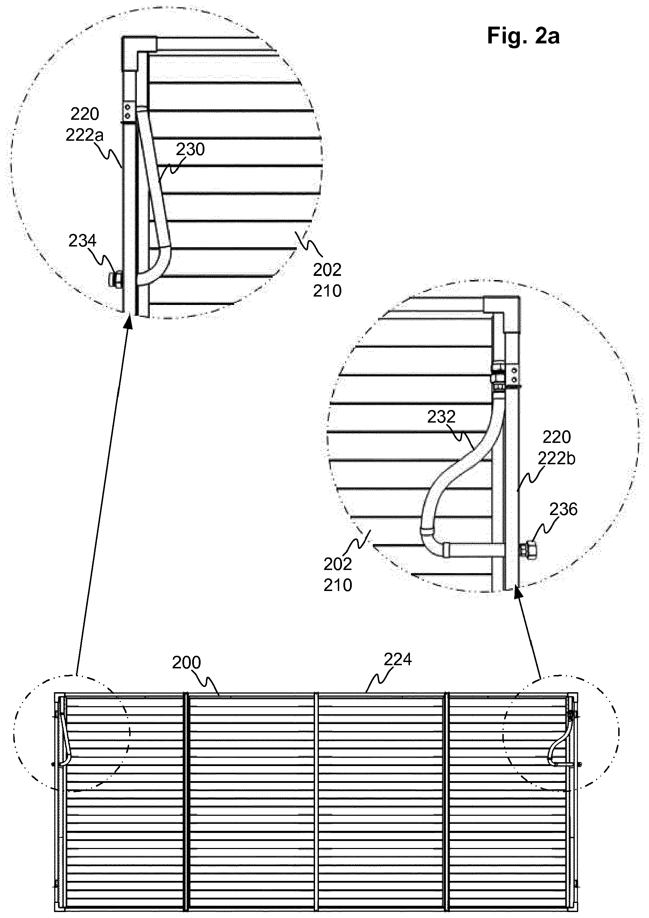

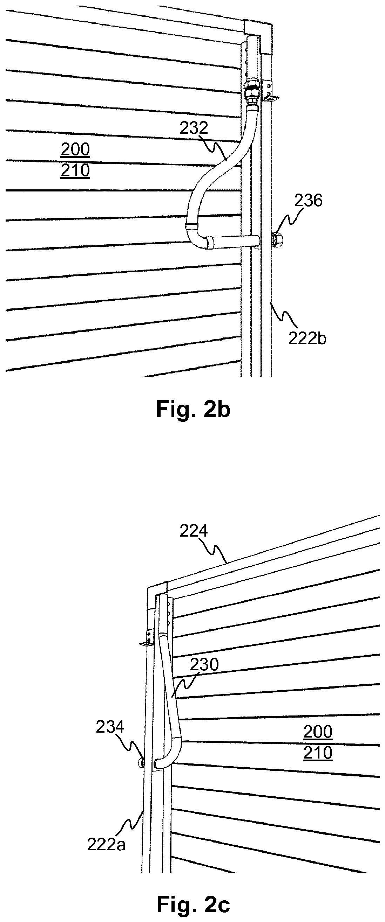

The supported and positioned collectors 110a, 110b are connected to each other by means of a hydraulic connection illustrated in figures 2a-2c.

With the sufficiently flexible hydraulic connection, it is possible to make an ultra-short, e.g. approx. 20-40 mm, collector-to-collector mounting distance, which together with the shared support 100 provides a significantly, e.g. almost 50%, reduced number of piles.

The supported collector(s) 110a, 110b is attached to the part 140, which comprises at least one mounting hole 142, e.g. at least one elongated hole, by means of attaching means 150, which comprise e.g. an attaching support (attaching bracket) 150, e.g. an L-shaped steel plate (bracket), and a screw-nut combination for each support 150.

The support(s) 150 is installed on a back side 112a, 112b of the supported collector(s) 110a, 110b, e.g. on side frames (side walls) of a collector frame 111, and attached by the screw-nut combination(s) through the hole 142. The elongated hole(s) 142 and the screw-nut attachement(s) allow to slide the supported collector(s) 110a, 110b even after some tensioning of the screw-nut combination(s) e.g. to allow for some expansion of the collector(s) 110a, 110b. The support(s) 150 prevents a movement of the supported collector 110a, 110b in an inclination direction.

The T-shaped supports 100 ensure good alignment between the adjacent collectors 110a, 110b in a row since there is no need for e.g highly adjustable brackets.

In addition, the supports 100 provides nice visual appearance when the collector row can easily be made to smoothly follow the height profile of the ground.

In addition, the collector row with multiple collectors 110a, 110b will in practice appear like one long collector surface, which facilitates a collector glass cleaning, especially if the cleaning is automated.

Figure 2a illustrates a back side 202 of a large area solar thermal collector 200, which can be used e.g in district heating systems.

The collector 200 comprises an absorber 210 for absorbing solar radiation. The absorber 210 comprises a heat transport channel for a heat transport fluid and it - as well as some other parts of the collector 200 - is covered by a collector frame 220. The heat transport channel comprises an internal access (an internal inlet) and an internal exit (an internal outlet) inside the collector 200.

The frame 220 comprises an access hole (an inlet hole) and an exit hole (an outlet hole), which enable the hydraulic connection 230, 232 between the heat transport channel and other heat transport channels. The access and exit holes in the frame 220 can be either aligned or offset from the internal access and exit on the absorber 210. The access and exit holes can be located e.g. in a middle of side frames (side walls) 222a, 222b of the frame 220 and the internal access and exit can be located e.g. in corners of the frame 220 as figures 2a-2c illustrate.

The collector 200 does not have significant external connections, whereupon there is no shadow effect on a next collector row behind from the hydraulic connections 230, 232, which improves a field efficiency/production.

In addition, a wind load on the collector row under stormy conditions is reduced, because of the absence of the significant external connections, which eases requirements on the mechanical support system.

In addition, a highest part of the installation is a top frame (top wall) 224, which eases an integration with the landscape and promotes an approval of new solar fields.

In addition, the offsets remove a need for having the hydraulic connection 230, 232 (access and exit holes) near collector corners, which reduces mechanical weakening of the corners, when the internal access and exit in upper corners of the absorber 210 are maintained. This provides no issues with captured air during filling of the absorber 210.

In addition, the height of the hydraulic connection 230, 232 is reduced to approx. 1,5 m over the ground from approx. 2 m, which provides easy reach for a normal person and improves work ergonomics during the mounting of the hydraulic connections 230, 232.

Alternatively, it is possible that the access and exit holes locate in e.g. the top frame 224 or anywhere else of the collector 200.

The hydraulic connection 230, 232 is provided by means of integrated hydraulic connection tubes 230, 232 that connect the heat transport channel and the other heat transport channels, e.g. a heat transport channel of another collector 200, through the access and exit holes. The tubes 230, 232 are installed at least partly inside the collector 200 and at least one of the tubes 230, 232 comprises a flexible part (is flexible) inside the collector 200, whereupon it can be bended inside the collector 200.

One of the tubes 230, 232 can be an inflexible tube, whereupon other one of the tubes 230, 232 comprises at least one flexible part, which is at least partly inside the collector 200, or it is completely flexible. Alternatively, each tube 230, 232 in the collector can be partly flexible - so that at least a part of a flexible part is inside the collector 200 - or completely flexible.

The integration of the tubes 230, 232 provides an improved insulation by use of existing collector insulation (increased thermal resistance), whereupon power loss is reduced.

In addition, the integration of tubes 230, 232 reduces a need for tube bending, which significantly reduces a collector row pressure drop, increases maximum possible length of collector rows, which for one reduces a field installation cost, eases requirements on pressure rating of a field pump, and reduces electrical energy consumption by the field pump.

At least one of the tubes 230, 232 is flexible outside the frame 220 and the collector 200, whereupon it is possible to bend the tube(s) 230, 232 during the connection to the other heat transport channels. So, the tube(s) 230, 232 can be a flexible metal and/or plastic tube (hose) 230, 232 at least partly.

The integrated tube(s) 230, 232 reduces tube bending, whereupon a flexible tube installation is now with reduced mechnical loading of the tubes (hoses) 230, 232.

The tube 230 comprises an inlet connection adapter 234 and the tube 232 comprisies an outlet connection adapter 236 for connecting the tubes 230, 232, or vice versa, so that the adapter 236 of one collector 200 is connected to its counterpart, i.e. the adapter 234 of the another collector 200 (heat transport channel), and so on.

The tubes 230, 232 provide only one connection point per the collector 200 instead of two, whereupon it reduces significantly an installation time when the interconnection between the collectors 200 is simple: the collector mounting and hydraulic connection is now a single step operation. It is also possible to realize solutions, which comprise two connections of similar types, e.g. two of the tube 230 or the tube 232.

In addition, the tubes 230, 232 between the side frames 222a, 222b provide an easier handling of thermal expansion when a full worst case absorber expansion can be handled largely without mechanical loading of the absorber 210.

In addition, the collector 200 enables in-production tube test, when only one field-tested adapter connection per the collector 200. Thus, fewer in-field connections are required and, so, the risk of in-field introduced connection leaks is reduced.

The adapter(s) 234, 236 comprises a transport position for protecting the adapter(s) 234, 236 during transportation. The adapter(s) 234, 236 is pulled out from the transport position for the hydraulic connection 230, 232 and pushed back fully or partly into the collector 200 during its connection.

The integrated tubes 230, 232 enable together with the T-shaped supports 100 an ultra-short distance, approx. 20-40 mm, between the adjacent collector 200 by the increased mechanical flexibility of the hydraulic connection 230, 232.

Due to the short collector distance, minimal fraction of the hydraulic connection 230, 232 is exposed to an ambient temperature, which also provides the reduced power loss.

In addition, tubes 230, 232 provide an increased collector field power density.

In addition, tubes 230, 232 provide an improved and uniform overall visual appearance by absence of visual external hydraulic connection above the collectors 200. The visual appearance is now similar to that of widely used large scale photovoltaic (PV) installations, whereupon a seamless visual integration with PV installations is possible.

The invention has been now explained above with reference to the aforesaid embodiments and the several advantages of the invention have been demonstrated. It is clear that the invention is not only restricted to these embodiments, but comprises all possible embodiments within the scope of the invention thought and the following claims.

## Claims

1. A solar thermal collector (200) comprising
an absorber (210) for absorbing solar radiation,
a collector frame (220) for covering the absorber, and
hydraulic connection tubes (230, 232) for connecting a heat transport channel and other heat transport channels through access and exit holes of the frame,
wherein the absorber comprises the heat transport channel for a heat transport fluid, wherein the tubes are installed at least partly inside the collector, wherein at least one of the tubes is flexible inside the collector (200), between side frames (222a, 222b) of the collector frame (220), and it is arranged so that it is bendable inside the collector (200), **characterized in that** at least one of the tubes is such that it is possible to bend it outside the frame during a connection to other heat transport channel.

2. The collector according to the preceding claim, wherein the at least one of the tubes is flexible outside the collector.

3. The collector according to any of the preceding claims, wherein the at least one of the tubes is bended inside the collector.

4. The collector according to any of the preceding claims, wherein the at least one of the tubes is a flexible hose (230, 232).

5. The collector according to any of the preceding claims, wherein each of the tubes comprises a connection adapter (234, 236) for connecting the tube to a connection adapter (234, 236) of other heat transport channel.

6. The collector according to claim 5, wherein the adapter comprises a transport position for protecting the adapter during transportation, wherein the adapter is configured to be pulled out from the transport postion for the hydraulic connection and to be pushed back into the collector during the connection of the collector.

7. The collector according to any of the preceding claims, wherein the access and exit holes locate in the side frames (222a, 222b) of the frame.

8. A method for connecting the solar thermal collector (200) according to any of the preceding claims, comprising bending the at least one of the hydraulic connection tubes (230, 232) inside the collector.

## Patentansprüche

1. Solarthermischer Kollektor (200), umfassend
einen Absorber (210) zur Absorption von Sonnenstrahlung,
einen Kollektorrahmen (220) zum Abdecken des Absorbers und
hydraulische Verbindungsrohre (230, 232) zum Verbinden eines Wärmetransportkanals und anderer Wärmetransportkanäle durch Zugangs- und Ausgangslöcher des Rahmens,
wobei der Absorber den Wärmetransportkanal für ein Wärmetransportfluid umfasst,
wobei die Rohre zumindest teilweise innerhalb des Kollektors installiert sind,
wobei mindestens eines der Rohre innerhalb des Kollektors (200) zwischen den Seitenrahmen (222a, 222b) des Kollektorrahmens (220) flexibel ist;
und es so angeordnet ist, dass es innerhalb des Kollektors (200) biegbar ist,
**dadurch gekennzeichnet, dass** mindestens eines der Rohre so beschaffen ist, dass es möglich ist, es beim Verbinden mit einem anderen Wärmetransportkanal außerhalb des Rahmens zu biegen.

2. Kollektor nach dem vorhergehenden Anspruch, wobei das mindestens eine der Rohre außerhalb des Kollektors flexibel ist.

3. Kollektor nach einem der vorhergehenden Ansprüche, wobei das mindestens eine der Rohre innerhalb des Kollektors gebogen ist.

4. Kollektor nach einem der vorhergehenden Ansprüche, wobei das mindestens eine der Rohre ein flexibler Schlauch (230, 232) ist.

5. Kollektor nach einem der vorhergehenden Ansprüche, wobei jedes der Rohre einen Verbindungsadapter (234, 236) zum Verbinden des Rohrs mit einem Verbindungsadapter (234, 236) eines anderen Wärmetransportkanals umfasst.

6. Kollektor nach Anspruch 5, wobei der Adapter eine Transportposition zum Schutz des Adapters während des Transports umfasst, wobei der Adapter konfiguriert ist, um aus der Transportposition für den hydraulischen Anschluss herausgezogen und beim Verbinden des Kollektors in den Kollektor zurückgeschoben zu werden.

7. Kollektor nach einem der vorhergehenden Ansprüche, wobei sich die Zugangs- und Ausgangslöcher in den Seitenrahmen (222a, 222b) des Rahmens befinden.

8. Verfahren zum Verbinden des solarthermischen Kollektors (200) nach einem der vorhergehenden Ansprüche, umfassend
Biegen mindestens eines der hydraulischen Verbindungsrohre (230, 232) im Kollektor.

## Revendications

1. Capteur solaire thermique (200) comprenant
un absorbeur (210) pour absorber le rayonnement solaire,
un cadre de capteur (220) pour recouvrir l'absorbeur, et
des tubes de raccordement hydraulique (230, 232) pour raccorder un canal caloporteur et d'autres canaux caloporteurs à travers des trous d'accès et de sortie du cadre, dans lequel l'absorbeur comprend le canal caloporteur pour un fluide caloporteur,
dans lequel les tubes sont installés au moins partiellement à l'intérieur du capteur, dans lequel
au moins un des tubes est flexible à l'intérieur du capteur (200), entre des cadres latéraux (222a, 222b) du cadre de capteur (220), et il est agencé de manière à pouvoir être plié à l'intérieur du capteur (200), **caractérisé en ce qu'**au moins un des tubes est tel qu'il est possible de le plier à l'extérieur du cadre lors d'un raccordement à un autre canal caloporteur.

2. Capteur selon la revendication précédente, dans lequel l'au moins un des tubes est flexible à l'extérieur du capteur.

3. Capteur selon l'une quelconque des revendications précédentes, dans lequel l'au moins un des tubes est plié à l'extérieur du capteur.

4. Capteur selon l'une quelconque des revendications précédentes, dans lequel l'au moins un des tubes est un tuyau flexible (230, 232).

5. Capteur selon l'une quelconque des revendications précédentes, dans lequel chacun des tubes comprend un adaptateur de raccordement (234, 236) pour raccorder le tube à un adaptateur de raccordement (234, 236) d'un autre canal caloporteur.

6. Capteur selon la revendication 5, dans lequel l'adaptateur comprend une position de transport pour protéger l'adaptateur pendant le transport, dans lequel l'adaptateur est configuré pour être retiré de la position de transport pour le raccordement hydraulique et pour être repoussé dans le capteur lors du raccordement du capteur.

7. Capteur selon l'une quelconque des revendications précédentes, dans lequel les trous d'accès et de sortie sont situés dans les cadres latéraux (222a, 222b) du cadre.

8. Procédé de raccordement du capteur solaire thermique (200) selon l'une quelconque des revendications précédentes, comprenant
le pliage de l'au moins un des tubes de raccordement hydraulique (230, 232) à l'intérieur du capteur.
